# FASCICULE DE BREVET EUROPEEN

(11) **EP 0 873 374 B1**
(45) Date de publication et mention de la délivrance du brevet: **27.10.1999**
(21) Numéro de dépôt: 97900247.4
(22) Date de dépôt: 08.01.1997
(51) Int. Cl.: C08K 5/17

(54) **POUDRES REDISPERSABLES DANS L'EAU DE POLYMERES FILMOGENES PREPARES A PARTIR DE MONOMERES A INSATURATION ETHYLENIQUE**
IN WASSER REDISPERGIERBARE PULVER AUS FILMBILDENDEN POLYMEREN AUF BASIS ETHYLENISCH UBGESÄTTIGTER MONOMERE
WATER-REDISPERSIBLE POWDERS OF FILM-FORMING POLYMERS PREPARED FROM ETHYLENICALLY UNSATURATED MONOMERS

(30) Priorité: 10.01.1996 FR 9600188
(43) Date de publication de la demande: 28.10.1998
(73) Titulaire: RHODIA CHIMIE, 92408 Courbevoie Cédex (FR)
(72) Inventeur: BETT, William, 75011 Paris (FR); COLOMBET, Jean-François, F-92500 Rueil-Malmaison (FR)
(74) Mandataire: Dubruc, Philippe
(86) Numéro de dépôt international: FR9700030
(87) Numéro de publication internationale: WO9725371

(56) Documents cités:
- EP-A- 0 078 449
- EP-A- 0 294 126
- EP-A- 0 544 377
- FR-A- 1 570 766
- FR-A- 2 264 003
- FR-A- 2 336 440
- FR-A- 2 348 242

## Description

La présente invention concerne des poudres redispersables dans l'eau de polymères filmogènes préparés à partir de monomères à insaturation éthylénique.

On connaît déjà des poudres redispersables obtenues par pulvérisation et séchage de dispersions de polymères filmogènes acryliques, et surtout de dispersions de polymères d'esters vinyliques.

Les polymères filmogènes préparés à partir de monomères à insaturation éthylénique sont utilisés fréquemment comme adjuvants dans les compositions de liants minéraux hydrauliques pour en améliorer la mise en oeuvre et les propriétés après durcissement telles que l'adhésion sur divers substrats, l'étanchéité, la souplesse, les propriétés mécaniques.

Les poudres redispersables présentent l'avantage par rapport aux dispersions aqueuses de pouvoir être prémélangées avec le ciment sous forme de compositions pulvérulentes prêtes à l'emploi utilisables par exemple pour la fabrication de mortiers et bétons destinés à être accrochés sur des matériaux de construction, pour la fabrication de mortiers-colles ou pour la réalisation d'enduits de protection et de décoration à l'intérieur ou à l'extérieur des bâtiments.

Pour parvenir à obtenir des poudres ne s'agglomérant pas au cours du stockage sous l'effet de la pression et de la température et convenablement redispersables dans l'eau, on a coutume de leur adjoindre des quantités relativement importantes de substance inertes et de colloïdes protecteurs.

Pour obtenir des poudres de polymères facilement redispersables, il a été proposé d'ajouter aux dispersions, avant pulvérisation, des produits de condensation mélamine-formaldéhyde-sulfonate (US-A-3784648) ou naphtalène-formaldéhyde-sulfonate (DE-A-3143070) et/ou des copolymères vinylpyrrolidone-acétate de vinyle (EP-78449).

Le brevet français FR-A-2 245 723 vise une préparation séchée par congélation, stable et dispersable dans l'eau contenant une poudre d'un latex de polymère et un agent dispersant hydrosoluble qui est un saccharide.

Le but de la présente invention est de proposer une nouvelle composition pulvérulente redispersable totalement ou presque totalement dans l'eau, qui soit à base d'un polymère filmogène préparé à partir de monomères à insaturation éthylénique.

Un autre but de la présente invention est de proposer une poudre redispersable du type ci-dessus qui soit stable au stockage sans agglomération.

Un autre but de la présente invention est de proposer un procédé de préparation des poudres de type ci-dessus à partir de latex de polymère filmogène.

Un autre but de la présente invention est de proposer une poudre redispersable du type ci-dessus qui, sous forme de poudre ou après éventuelle redispersion dans l'eau sous forme de pseudo latex, soit utilisable dans tous les domaines d'application des latex pour réaliser des revêtements (notamment peintures, composition de couchage du papier) ou des compositions adhésives (notamment adhésifs sensibles à la pression, colles carrelage).

Un autre but de la présente invention est de proposer une poudre redispersable du type ci-dessus (ou le pseudo-latex en découlant) plus particulièrement en vue de son utilisation comme additifs à des liants hydrauliques du type mortiers ou bétons et procurant à ces liants une adhérence améliorée après immersion en milieu humide.

Ces buts et d'autres sont atteints par la présente invention qui concerne en effet une composition pulvérulente redispersable dans l'eau et comportant :
a) 100 parties en poids d'une poudre de polymère filmogène insoluble dans l'eau et préparé à partir d'au moins un monomère à insaturation éthylénique et au moins un monomère choisi parmi les monomères à fonction carboxylique et l'acrylamide ou le méthacrylamide,
b) 2 à 40 parties en poids, de préférence 8 à 22 parties en poids, d'au moins un acide aminé ou un de ses sels.

L'invention concerne également le procédé de préparation de cette composition pulvérulente qui consiste
- à éliminer l'eau d'une émulsion aqueuse constituée dudit polymère filmogène insoluble préparé par polymérisation en émulsion et contenant une quantité adaptée d'additifs b)
- et à pulvériser le résidu sec en une poudre à la granulométrie désirée.

L'invention concerne aussi le pseudo-latex obtenu par redispersion dans l'eau d'une composition pulvérulente telle que définie précédemment.

Enfin, l'invention concerne l'utilisation desdits pseudo-latex et compositions pulvérulentes précédents comme additifs à des liants hydrauliques, des adhésifs, des compositions de couchage du papier et des peintures.

L'invention concerne tout d'abord une composition pulvérulente redispersable dans l'eau et comportant :
a) 100 parties en poids d'une poudre de polymère filmogène insoluble dans l'eau et préparé à partir d'au moins un monomère à insaturation éthylénique et au moins un monomère choisi parmi les monomères à fonction carboxylique et l'acrylamide ou le méthacrylamide,
b) 2 à 40 parties en poids, de préférence 8 à 22 parties en poids, d'au moins un acide aminé ou un de ses sels.

Le monomère à insaturation éthylénique peut être choisi parmi : le styrène, le butadiène, les esters acryliques ou méthacryliques d'alkyle en C₁-C₁₂ et leurs acides correspondants ou les esters vinyliques. La composition pulvérulente selon l'invention comprend de manière avantageuse un polymère filmogène insoluble préparé à partir d'un mélange styrène/butadiène ou styrène/butadiène/acide acrylique en ce qui concerne les monomères à insaturation éthylénique.

Les monomères à fonction carboxylique sont choisis parmi les acides carboxyliques à insaturation éthylénique. De préférence, il s'agit des diacides carboxyliques à insaturation éthylénique tels que : l'acide fumarique, l'acide itaconique, l'acide crotonique, l'acide maléique, l'anhydride maléique, l'acide mésaconique, l'acide glutaconique ou leurs mélanges.

De préférence, le polymère filmogène est préparé par polymérisation d'un mélange de monomères comportant 99,9 à 92 % en poids d'au moins un monomère à insaturation éthylénique et 0,1 à 8 %, avantageusement 2 à 5 %, en poids d'au moins un monomère à fonction carboxylique. La taille des particules de la poudre de polymère filmogène peut être comprise entre 0,05 et 5 µm, de préférence entre 0,12 et 0,18 µm, encore plus préférentiellement entre 0,10 et 0,20 µm.

De préférence, le polymère filmogène insoluble dans l'eau présente une température de transition vitreuse (Tg) d'au plus 20°C, de préférence comprise entre -20°C et 20°C.

Le polymère filmogène insoluble dans l'eau peut être obtenu par polymérisation en émulsion des monomères. Une telle polymérisation est habituellement mise en oeuvre en présence d'un émulsifiant et d'un initiateur de polymérisation.

Les monomères peuvent être introduits en mélange ou séparément et simultanément dans le milieu réactionnel, soit avant le début de la polymérisation en une seule fois, soit au cours de la polymérisation par fractions successives ou en continu.

En tant qu'agent émulsifiant, on met en oeuvre généralement les agents anioniques classiques représentés notamment par les sels d'acides gras, les alkylsulfates, les alkylsulfonates, les alkylarylsulfates, les alkylarylsulfonates, les arylsulfates, les arylsulfonates, les sulfosuccinates, les alkylphosphates de métaux alcalins. Ils sont employés à raison de 0,01 à 5 % en poids par rapport au poids total des monomères.

L'initiateur de polymérisation en émulsion, qui est hydrosoluble, est représenté plus particulièrement par les hydroperoxydes tels que l'eau oxygénée, l'hydroperoxyde de tertiobutyle et par les persulfates tels que le persulfate de sodium, le persulfate de potassium, le persulfate d'ammonium. Il est employé en quantités comprises entre 0,05 et 2 % en poids par rapport au total des monomères. Ces initiateurs sont éventuellement associés à un réducteur, tel que le bisulfite ou le formaldéhydesulfoxylate de sodium, les polyéthylène amines, les sucres : dextrose, saccharose, les sels métalliques. Les quantités de réducteur utilisés varient de 0 à 3 % en poids par rapport au poids total des monomères.

La température de réaction, fonction de l'initiateur mis en oeuvre, est généralement comprise entre 0 et 100°C, et de préférence, entre 50 et 80°C.

On peut utiliser un agent de transfert dans des proportions allant de 0 à 3% en poids par rapport au(x) monomère(s), généralement choisi parmi les mercaptans tels que le n-dodécylmercaptan, le tertiododécylmercaptan, le tertiobutylmercaptan ou leurs esters comme le méthylmercaptopropionate ; le cyclohexène ; les hydrocarbures halogénés tels que le chloroforme, le bromoforme, le tétrachlorure de carbone.

La composition pulvérulente selon l'invention comprend également au moins un acide aminé ou un sel d'acide aminé. L'acide aminé est de préférence choisi parmi :
- les acides monoaminés monocarboxylés,
- ou les acides monoaminés dicarboxylés,
- ou les acides diaminés monocarboxylés.

Les acides monoaminés monocarboxylés peuvent être notamment choisis parmi la glycine, l'alanine, la leucine, la phénylalanine, les acides monoaminés dicarboxylés peuvent être choisis parmi l'acide aspartique, l'acide glutamique, l'acide hydroxyglutamique, et les acides diaminés monocarboxylés peuvent être choisis parmi l'arginine, la lysine, l'histidine, la cystine.

Les acides aminés entrant dans la composition selon l'invention présentent de manière avantageuse une bonne solubilité dans l'eau, par conséquent les acides aminés de la composition peuvent se présenter sous la forme de sels et notamment de sels hydrosoluble ou hydroalcalisoluble. Il peut s'agir par exemple de sels de sodium, de potassium, d'ammonium ou de calcium.

Les compositions pulvérulentes selon l'invention peuvent comprendre en outre au moins un composé hydrosoluble c) choisi parmi les polyélectrolytes appartenant à la famille des polyacides faibles. Plus particulièrement, ce composé est un solide.

Selon un mode de réalisation particulier de l'invention, ce composé hydrosoluble est choisi parmi les polyélectrolytes de nature organique issus de la polymérisation de monomères qui ont la formule générale suivante : 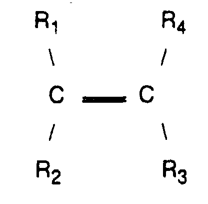 formule dans laquelle Rᵢ, identiques ou différents représentent H, CH₃, CO₂H, (CH₂)n CO₂H avec n = 0 à 4.

A titre d'exemples non limitatifs, on peut citer les acides acrylique, méthacrylique, maléique, fumarique, itaconique, crotonique.

Conviennent également à l'invention, les copolymères obtenus à partir des monomères répondant à la formule générale précédente et ceux obtenus à l'aide de ces monomères et d'autres monomères, en particulier les dérivés vinyliques comme les alcools vinyliques et les amides copolymérisables comme l'acrylamide ou le méthacrylamide. On peut également citer les copolymères obtenus à partir d'alkyle vinyl éther et d'acide maléique ainsi que ceux obtenus à partir de vinyl styrène et d'acide maléique qui sont notamment décrits dans l'encyclopédie KIRK-OTHMER intitulé "ENCYCLOPEDIA OF CHEMICAL TECHNOLOGY" - Volume 18 - 3 ème édition - Wiley interscience publication - 1982. Conviennent également à l'invention les polymères peptidiques dérivés de la polycondensation d'acides aminés, notamment de l'acide aspartique et glutamique ou des précurseurs des diaminodiacides. Ces polymères peuvent être aussi bien des homopolymères dérivés de l'acide aspartique ou glutamique que des copolymères dérivés de l'acide aspartique et de l'acide glutamique en proportions quelconques, ou des copolymères dérivés de l'acide aspartique et / ou glutamique et d'aminoacides autres. Parmi les aminoacides copolymérisables, on peut citer la glycine, l'alanine, la leucine, l'isoleucine, la phényl alanine, la méthionine, l'histidine, la proline, la lysine, la sérine, la thréonine, la cystéine...

Les polyélectrolytes préférés présentent un degré de polymérisation faible.

La masse moléculaire en poids des polyélectrolytes est plus particulièrement inférieure à 20000 g/mole. De préférence, elle est comprise entre 1000 et 5000 g/mole.

Bien entendu, il est tout à fait envisageable d'utiliser ces différents types de composés hydrosolubles en combinaison.

La composition selon l'invention peut comprendre en outre un polymère choisi parmi les polyacrylamides et les polyvinylpyrrolidones ou leurs mélanges. De préférence, les polyacrylamides utilisés présentent une masse moléculaire en poids d'au plus 10 000, voire d'au plus 2000.

La composition selon l'invention peut comprendre de 5 à 20 parties en poids, de préférence de 5 à 15 parties, encore plus préférentiellement entre 2 et 10 parties de ces composés hydrosolubles pour 100 parties en poids de poudre de polymère filmogène.

La composition selon l'invention peut comprendre en outre une charge minérale d) présentant une granulométrie inférieure à 20 µm environ.

Comme charge minérale, on recommande d'utiliser une charge choisie notamment parmi la silice, le carbonate de calcium, le kaolin, le sulfate de baryum, l'oxyde de titane, le talc, l'alumine hydratée, la bentonite et le sullfoaluminate de calcium (blanc satin).

La présence de ces charges minérales favorise la préparation de la poudre et sa stabilité au stockage en évitant l'agrégation de la poudre, c'est-à-dire son mottage.

On peut ajouter cette charge minérale directement à la composition pulvérulente ou elle peut être issue du procédé de préparation de la composition. La quantité de charge minérale peut être comprise entre 0,5 et 60, de préférence de 10 et 20 parties en poids, pour 100 parties de poudre de polymère filmogène insoluble dans l'eau.

Les compositions pulvérulentes obtenues sont stables au stockage ; elles peuvent être aisément redispersées dans l'eau sous forme de pseudo-latex et utilisées directement sous forme de poudre ou sous forme de pseudo-latex dans tous les domaines d'application connus des latex. Elles présentent également une excellente fluidité

L'invention concerne également le procédé de préparation de ladite composition pulvérulente qui consiste :
- à éliminer l'eau d'une émulsion aqueuse constituée dudit polymère filmogène insoluble préparé par polymérisation en émulsion et contenant des quantités adaptées des additifs b) et éventuellement c) et d),
- et à pulvériser le résidu sec en une poudre à la granulométrie désirée.

On part d'une émulsion aqueuse de la poudre de polymère filmogène insoluble dans l'eau obtenue par polymérisation en émulsion telle que définie précédemment. Ce type d'émulsion est communément appelée latex.

On ajoute à cette émulsion aqueuse les autres composants de la composition pulvérulente : l'acide aminé ou le sel d'acide aminé (b), éventuellement le composé hydrosoluble (c) et la charge minérale (d). Les teneurs respectives des divers constituants sont choisies de telle sorte que les compositions pulvérulentes séchées présentent la composition définie auparavant.

De préférence, on part d'une émulsion présentant un extrait sec (polymère filmogène + acide aminé ou sel d'acide aminé + composé hydrosoluble + charge minérale) compris entre 30 et 70 % en poids.

Bien évidemment, dans le cas où des additifs classiques sont utilisés, on peut les ajouter lors de la formation de l'émulsion.

On ajoute par exemple au latex sous agitation une solution aqueuse de l'ordre de 30 % en poids d'hydrogénoglutamate de sodium. Les quantités respectives sont calculées de façon à obtenir un mélange contenant, en matière active, de l'ordre de 15 ou 20 % en poids d'hydrogénoglutamate de sodium et entre 80 et 85 % de polymère filmogène.

Le mélange obtenu peut présenter dans ce cas un extrait sec de l'ordre de 45 % en poids, un pH de l'ordre de 5 et une viscosité mesurée au BROOKFIELD RVT-DVII à 50 tr/min comprise entre 7 et 100 mPA.s.

L'eau de cette émulsion est ensuite éliminée et le produit obtenu pulvérisé pour obtenir une poudre. Les étapes d'élimination de l'eau de l'émulsion de latex et d'obtention d'une poudre peuvent être séparées ou concomitantes. Ainsi, on peut utiliser un procédé de congélation, suivie d'une étape de sublimation, ou de lyophilisation, de séchage ou de séchage par atomisation (pulvérisation - séchage).

Le séchage par atomisation est le procédé préféré car il permet d'obtenir directement la poudre à la granulométrie désirée sans passer nécessairement par l'étape de broyage. La granulométrie de la poudre est généralement inférieure à 500 µm, de préférence inférieure à 100 µm, encore plus préférentiellement supérieure à 50 µm.

Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence comprise entre 120 et 70°C et la température de sortie est de préférence comprise entre 50 et 70°C.

La charge minérale d) peut être ajoutée à l'émulsion aqueuse de polymère de départ. Tout ou partie de la charge minérale peut également être introduite lors de l'étape de pulvérisation dans le procédé de séchage par atomisation. Il est possible enfin d'ajouter la charge minérale directement à la composition pulvérulente finale, par exemple dans un mélangeur rotatif.

Selon un mode préféré, on peut introduire, dans la tour d'atomisation, des particules minérales de faible taille, par exemple de l'ordre de 3 µm en quantité telle que la composition pulvérulente, à la sortie de l'atomiseur, présente une teneur en particules de l'ordre de 10 % en poids ; puis rajouter à cette poudre 20 % en poids de particules de taille moyenne, par exemple de l'ordre de 15 µm, le mélange étant homogénéisé dans un mélangeur rotatif.

Dans la plupart des cas, les compositions pulvérulentes selon l'invention sont totalement redispersables dans l'eau à température ambiante par simple agitation. Par totalement redispersables, on entend une poudre conforme à l'invention qui après addition d'une quantité adaptée d'eau permet d'obtenir un pseudo-latex dont la granulométrie des particules est sensiblement identique à la granulométrie des particules de latex présentes dans l'émulsion de départ. Elles présentent ainsi un excellent mouillage par l'eau et une redispersion spontanée, rapide et totale par redispersion de cette poudre dans l'eau déionisée ou dans une solution de CaCl₂ (1M). La distribution granulométrique du pseudo-latex obtenu par redispersion de cette poudre dans l'eau déterminée avec un photosédimentomètre Brookhaven DCP1000 est identique à celle du latex de départ.

L'invention concerne également le pseudo-latex obtenu par redispersion dans l'eau d'une composition pulvérulente telle que définie précédemment.

Enfin, l'invention concerne l'utilisation des compositions pulvérulentes décrites ci-dessus dans l'industrie du bâtiment comme additifs aux mélanges de liants minéraux hydrauliques pour la réalisation d'enduits de protection et de décoration, des mortiers-colles et des ciments-colles destinés à la pose de carrelages et de revêtements de sols. Elles s'avèrent particulièrement bien adaptées à la préparation de produits en poudre prêts à l'emploi à base de ciment ainsi que de plâtre.

Ajoutée dans un mortier de ciment, la composition pulvérulente selon l'invention confère à ce mortier les mêmes propriétés que celles du latex de départ dont elle est issue, à savoir une amélioration notable de l'adhésion sur divers supports quel que soit le conditionnement du mortier (séchage, immersion dans l'eau, chauffage jusqu'à 80°C), des résistances à la flexion, à l'adhésion et au choc. Elle permet également une nette diminution de la reprise d'eau des revêtements de mortier adjuvanté.

Les compositions pulvérulentes de l'invention ou les pseudo-latex en dérivant sont utilisables en outre dans tous les autres domaines d'application des latex, plus particulièrement dans le domaine des adhésifs, du couchage du papier et des peintures. Les compositions pulvérulentes selon l'invention peuvent comporter en outre les additifs usuels, en particulier des biocides, des microbiostats, des bactériostatiques, et des anti-mousses silicones et organiques.

### EXEMPLES

### Exemple 1

On utilise un latex issu de la polymérisation de styrène, de butadiène, d'acide acrylique et d'un diacide carboxylique à insaturation éthylénique. La taille des particules de polymère mesurée par photosédimentomètre Brookhaven DCP 1000 est de 0,17 ± 0,1 µm.

Ce latex est introduit dans un réacteur équipé d'un agitateur.

On ajoute au latex sous agitation une solution aqueuse à 30 % en poids d'hydrogénoglutamate de sodium. Les quantités respectives sont calculées de façon à obtenir un mélange contenant, en matière active, 15 % en poids d'hydrogénoglutamate de sodium et 85 % de polymère filmogène.

Le mélange obtenu présente les caractéristiques suivantes :
- extrait sec : 45,5 % en poids,
- pH : 5,5,
- viscosité mesurée au BROOKFIELD RVT-DVII à 50 tr/min : 90 mPA.s.

Ce mélange est transformé en poudre par séchage/pulvérisation. Ce séchage est réalisé dans une tour d'atomisation dans laquelle la température d'entrée de l'air chaud est de 105°C et la température de sortie de 60°C.

Durant l'atomisation, on introduit dans la tour des particules de kaolin de taille moyenne 3 µm en quantité telle que la composition pulvérulente, à la sortie de l'atomiseur, présente une teneur en kaolin de 10 % en poids.

On rajoute à cette poudre 20 % en poids de particules de carbonate de calcium de taille moyenne 15 µm, le mélange étant homogénéisé dans un mélangeur rotatif.

La poudre obtenue présente les caractéristiques suivantes :
. taille moyenne des particules : 80 µm,
. excellente fluidité,
. bonne stabilité au stockage,
. excellent mouillage par l'eau,
. redispersion spontanée, rapide et totale aussi bien dans l'eau déionisée que dans une solution concentrée de CaCl₂ (1 M).

La distribution granulométrique du pseudo-latex obtenu par redispersion de cette poudre dans l'eau déterminée avec un photosédimentomètre Brookhaven DCP1000 est identique à celle du latex de départ.

Ajoutée dans un mortier de ciment, la poudre confère à ce mortier les mêmes propriétés que celles du latex de départ, à savoir une amélioration notable de l'adhésion sur divers supports quel que soit le conditionnement du mortier (séchage, immersion dans l'eau, chauffage jusqu'à 80°C), des résistances à la flexion, à l'adhésion et au choc. Elle permet également une nette diminution de la reprise d'eau des revêtements de mortier adjuvanté.

### Exemple 2

On utilise un latex issu de la polymérisation de styrène, de butadiène, d'acide acrylique et d'un diacide carboxylique à insaturation éthylénique. La taille des particules de polymère mesurée par photosédimentomètre Brookhaven DCP 1000 est de 0,14 ± 0,1 µm.

Ce latex est introduit dans un réacteur équipé d'un agitateur.

On ajoute au latex sous agitation une solution aqueuse à 30 % en poids d'hydrogénoglutamate de sodium. Les quantités respectives sont calculées de façon à obtenir un mélange contenant, en matière active, 20 % en poids d'hydrogénoglutamate de sodium et 80 % de polymère filmogène.

Le mélange obtenu présente les caractéristiques suivantes :
- extrait sec : 44,2 % en poids,
- pH : 5,5,
- viscosité mesurée au BROOKFIELD RVT-DVII à 50 tr/min : 70 mPA.s.

Ce mélange est transformé en poudre par séchage/pulvérisation. Ce séchage est réalisé dans une tour d'atomisation dans laquelle la température d'entrée de l'air chaud est de 105°C et la température de sortie de 60°C.

Durant l'atomisation, on introduit dans la tour des particules de kaolin de taille moyenne 3 µm en quantité telle que la composition pulvérulente, à la sortie de l'atomiseur, présente une teneur en kaolin de 10 % en poids.

On rajoute à cette poudre 20 % en poids de particules de carbonate de calcium de taille moyenne 15 µm, le mélange étant homogénéisé dans un mélangeur rotatif.

La poudre obtenue présente les caractéristiques suivantes :
. taille moyenne des particules : 80 µm,
. excellente fluidité,
. bonne stabilité au stockage,
. excellent mouillage par l'eau,
. redispersion spontanée, rapide et totale aussi bien dans l'eau déionisée que dans une solution concentrée de CaCl₂ (1 M).

La distribution granulométrique du pseudo-latex obtenu par redispersion de cette poudre dans l'eau déterminée avec un photosédimentomètre Brookhaven DCP1000 est identique à celle du latex de départ.

Ajoutée dans un mortier de ciment, la poudre confère à ce mortier les mêmes propriétés que celles du latex de départ, à savoir une amélioration notable de l'adhésion sur divers supports quel que soit le conditionnement du mortier (séchage, immersion dans l'eau, chauffage jusqu'à 80°C), des résistances à la flexion, à l'adhésion et au choc. Elle permet également une nette diminution de la reprise d'eau des revêtements de mortier adjuvanté.

### Exemple 3

On utilise un latex issu de la polymérisation de styrène, de butadiène, d'acide acrylique et d'un diacide carboxylique à insaturation éthylénique. La taille des particules de polymère mesurée par photosédimentomètre Brookhaven DCP 1000 est de 0,17 ± 0,1 µm.

Ce latex est introduit dans un réacteur équipé d'un agitateur.

On ajoute au latex sous agitation une solution aqueuse à 30 % en poids d'hydrogénoglutamate de sodium et de polyacrylate de sodium de masse moléculaire 2000. Les quantités respectives sont calculées de façon à obtenir un mélange contenant, en matière active, 10 % en poids d'hydrogénoglutamate de sodium, 10 % de polyacrylate de sodium et 80 % de polymère filmogène.

Le mélange obtenu présente les caractéristiques suivantes :
- extrait sec : 44,2 % en poids,
- pH : 5,5,
- viscosité mesurée au BROOKFIELD RVT-DVII à 50 tr/min : 100 mPA.s.

Ce mélange est transformé en poudre par séchage/pulvérisation. Ce séchage est réalisé dans une tour d'atomisation dans laquelle la température d'entrée de l'air chaud est de 105°C et la température de sortie de 60°C.

Durant l'atomisation, on introduit dans la tour des particules de kaolin de taille moyenne 3 µm en quantité telle que la composition pulvérulente, à la sortie de l'atomiseur, présente une teneur en kaolin de 10 % en poids.

On rajoute à cette poudre 20 % en poids de particules de carbonate de calcium de taille moyenne 15 µm, le mélange étant homogénéisé dans un mélangeur rotatif.

La poudre obtenue présente les caractéristiques suivantes :
. taille moyenne des particules : 80 µm,
. excellente fluidité,
. bonne stabilité au stockage,
. excellent mouillage par l'eau,
. redispersion spontanée, rapide et totale aussi bien dans l'eau déionisée que dans une solution concentrée de CaCl₂ (1 M).

La distribution granulométrique du pseudo-latex obtenu par redispersion de cette poudre dans l'eau déterminée avec un photosédimentomètre Brookhaven DCP1000 est identique à celle du latex de départ.

Ajoutée dans un mortier de ciment, la poudre confère à ce mortier les mêmes propriétés que celles du latex de départ, à savoir une amélioration notable de l'adhésion sur divers supports quel que soit le conditionnement du mortier (séchage, immersion dans l'eau, chauffage jusqu'à 80°C), des résistances à la flexion, à l'adhésion et au choc. Elle permet également une nette diminution de la reprise d'eau des revêtements de mortier adjuvanté.

### Exemple comparatif 4 :

On utilise le latex de l'exemple 1. Ce latex est transformé en poudre par séchage/pulvérisation. Ce séchage est réalisé dans une tour d'atomisation dans laquelle la température d'entrée de l'air chaud est de 105°C et la température de sortie de 60°C.

Durant l'atomisation, on introduit dans la tour des particules de kaolin de taille moyenne 3 µm en quantité telle que la composition pulvérulente, à la sortie de l'atomiseur, présente une teneur en kaolin de 10 % en poids.

On rajoute à cette poudre 20 % en poids de particules de carbonate de calcium de taille moyenne 15 µm, le mélange étant homogénéisé dans un mélangeur rotatif.

La poudre obtenue présente une taille moyenne des particules de 80 µm.

Mélangée à de l'eau, la poudre ne se redisperse pas. Elle garde une granulométrie moyenne de l'ordre de 80 µm. La non redispersabilité dans l'eau de cette poudre lui confère de mauvaises propriétés dans les mortiers, contrairement aux poudres des exemples précédents.

## Revendications

1. Composition pulvérulente redispersable dans l'eau et comportant :
a) 100 parties en poids d'une poudre de polymère filmogène insoluble dans l'eau et préparé à partir d'au moins un monomère à insaturation éthylénique et au moins un monomère choisi parmi les monomères à fonction carboxylique et l'acrylamide ou le méthacrylamide,
b) 2 à 40 parties en poids, d'au moins un acide aminé ou un de ses sels.

2. Composition pulvérulente selon la revendication 1, caractérisée en ce que le monomère à insaturation éthylénique est choisi parmi : le styrène, le butadiène, les esters acryliques ou méthacryliques d'alkyle en C₁-C₁₂ et leurs acides correspondants ou les esters vinyliques.

3. Composition pulvérulente selon la revendication 1 ou 2, caractérisée en ce que les monomères à fonction carboxylique sont choisis parmi les acides carboxyliques à insaturation éthylénique.

4. Composition pulvérulente selon la revendication 3, caractérisée en ce que les monomères à fontion carboxylique sont choisis parmi les diacides carboxyliques à insaturation éthylénique tels que : l'acide fumarique, l'acide itaconique, l'acide crotonique, l'acide maléique, l'anhydride maléique, l'acide mésaconique, l'acide glutaconique ou leurs mélanges.

5. Composition pulvérulente selon l'une quelconque des revendications précédentes, caractérisée en ce que le polymère insoluble dans l'eau est est préparé à partir d'un mélange de monomères comportant 99,9 à 92 % en poids d'au moins un monomère à insaturation éthylénique et 0,1 à 8% en poids d'au moins un monomère à fonction carboxylique.

6. Composition pulvérulente selon l'une quelconque des revendications précédentes, caractérisée en ce que l'acide aminé est choisi parmi :
- les acides monoaminés monocarboxylés,
- les acides monoaminés dicarboxylés,
- les acides diaminés monocarboxylés.

7. Composition pulvérulente selon l'une quelconque des revendications précédentes caractérisée en ce que l'acide aminé est choisi parmi la glycine, l'alanine, la leucine, la phénylalanine, l'acide aspartique, l'acide glutamique, l'acide hydroxyglutamique, l'arginine, la lysine, l'histidine, la cystine.

8. Composition pulvérulente selon l'une quelconque des revendications précédentes caractérisée en ce que le sel de l'acide aminé est un sel hydrosoluble ou hydroalcalisoluble.

9. Composition pulvérulente selon l'une quelconque des revendications précédentes caractérisée en ce que la composition comprend au moins un composé hydrosoluble (c) choisi parmi les polyélectrolytes appartenant à la famille des polyacides faibles.

10. Composition pulvérulente selon l'une quelconque des revendications précédentes caractérisée en ce que la composition comprend une charge minérale (d) en poudre de granulométrie inférieure à 20 µm.

11. Procédé de préparation d'une composition pulvérulente redispersable telle que définie à l'une quelconque des revendications précédentes caractérisé en ce que :
- on élimine l'eau d'une émulsion aqueuse constitué dudit polymère filmogène insoluble préparé par polymérisation en émulsion et contenant des quantités adaptées des additifs (b) et éventuellement (c) et (d),
- et on pulvérise le résidu sec en une poudre à la granulométrie désirée.

12. Procédé selon la revendication 11 caractérisé en ce que le procédé choisi est le procédé par séchage/pulvérisation.

13. Procédé selon la revendication 11 ou 12 caractérisé en ce que tout ou partie de la charge minérale (d) est ajoutée à l'étape de pulvérisation.

14. Pseudo-latex obtenu par redispersion dans l'eau d'une composition pulvérulente telle que définie à l'une quelconque des revendications 1 à 10.

15. Utilisation des pseudo-latex définis à la revendication 14 et des compositions pulvérulentes définis aux revendications 1 à 10, comme additifs à des liants hydrauliques, des adhésifs, des compositions de couchage du papier et des peintures.

## Patentansprüche

1. Pulverförmige Zusammensetzung, die in Wasser redispergierbar ist und enthält:
a) 100 Gewichtsteile eines in Wasser unlöslichen, filmbildenden Polymerpulvers, hergestellt ausgehend von mindestens einem Monomer mit ethylenischer Unsättigung und mindestens einem Monomer, ausgewählt unter den Monomeren mit Carboxylfunktion und Acrylamid oder Methacrylamid,
b) 2 bis 40 Gewichtsteile von mindestens einer Aminosäure oder von einem ihrer Salze.

2. Pulverförmige Zusammensetzung nach Anspruch 1, dadurch gekennzeichnet, daß das Monomer mit ethylenischer Unsättigung ausgewählt wird unter: Styrol, Butadien, den Acrylestern oder Methacrylestern von Alkyl mit 1 bis 12 Kohlenstoffatomen und ihren entsprechenden Säuren oder den Vinylestern.

3. Pulverförmige Zusammensetzung nach Anspruch 1 oder 2, dadurch gekennzeichnet, daß die Monomeren mit Carboxylfunktion unter den Carbonsäuren mit ethylenischer Unsättigung ausgewählt werden.

4. Pulverförmige Zusammensetzung nach Anspruch 3, dadurch gekennzeichnet, daß die Monomeren mit Carboxylfunktion unter den Dicarbonsäuren mit ethylenischer Unsättigung ausgewählt werden wie: Fumarsäure, Itaconsäure, Crotonsäure, Maleinsäure, Maleinsäureanhydrid, Mesaconsäure, Glutaconsäure oder ihren Mischungen.

5. Pulverförmige Zusammensetzung nach irgendeinem der vorstehenden Ansprüche, dadurch gekennzeichnet, daß das in Wasser unlösliche Polymer ausgehend von einer Mischung von Monomeren hergestellt wird, die 99,9 bis 92 Gew.-% von mindestens einem Monomer mit ethylenischer Unsättigung und 0,1 bis 8 Gew.-% von mindestens einem Monomer mit Carboxylfunktion umfaßt.

6. Pulverförmige Zusammensetzung nach irgendeinem der vorstehenden Ansprüche, dadurch gekennzeichnet, daß die Aminosäure ausgewählt wird unter:
· den Monoamino-monocarbonsäuren,
· den Monoamino-dicarbonsäuren,
· den Diamino-monocarbonsäuren.

7. Pulverförmige Zusammensetzung nach irgendeinem der vorstehenden Ansprüche, dadurch gekennzeichnet, daß die Aminosäure ausgewählt wird unter Glycin, Alanin, Leucin, Phenylalanin, Asparaginsäure, Glutaminsäure, Hydroxyglutaminsäure, Arginin, Lysin, Histidin, Cystin.

8. Pulverförmige Zusammensetzung nach irgendeinem der vorstehenden Ansprüche, dadurch gekennzeichnet, daß das Salz der Aminosäure ein wasserlösliches oder in wäßrigen Alkalien lösliches Salz ist.

9. Pulverförmige Zusammensetzung nach irgendeinem der vorstehenden Ansprüche, dadurch gekennzeichnet, daß die Zusammensetzung mindestens eine wasserlösliche Verbindung (c) umfaßt, ausgewählt unter den Polyelektrolyten, die aus der Familie der schwachen Polysäuren stammen.

10. Pulverförmige Zusammensetzung nach irgendeinem der vorstehenden Ansprüche, dadurch gekennzeichnet, daß die Zusammensetzung einen mineralischen Füllstoff (d) in Pulverform mit einer Granulometrie von unter 20 µm umfaßt.

11. Verfahren zur Herstellung einer redispergierbaren, pulverförmigen Zusammensetzung wie in irgendeinem der vorstehenden Ansprüche definiert, dadurch gekennzeichnet, daß man
· das Wasser einer wäßrigen Emulsion entfernt, bestehend aus dem genannten unlöslichen, filmbildenden Polymer, das hergestellt wurde durch Emulsionspolymerisation und angepaßte Mengen von Zusatzstoff (b) und gegebenenfalls (c) und (d) umfaßt,
· den trockenen Rückstand zu einem Pulver mit der gewünschten Granulometrie pulverisiert.

12. Verfahren nach Anspruch 11, dadurch gekennzeichnet, daß das ausgewählte Verfahren das Verfahren durch Trocknen/Pulverisieren ist.

13. Verfahren nach Anspruch 11 oder 12, dadurch gekennzeichnet, daß der mineralische Füllstoff (d) vollständig oder teilweise bei der Stufe der Pulverisierung zugesetzt wird.

14. Pseudo-Latex, erhalten durch Redispersion in Wasser einer wie in irgendeinem der Ansprüche 1 bis 10 definierten pulverförmigen Zusammensetzung.

15. Verwendung der Pseuso-Latices wie in Anspruch 14 definiert und der pulverförmigen Zusammensetzungen wie in den Ansprüchen 1 bis 10 definiert als Zusatzstoffe zu hydraulischen Bindemitteln, Klebstoffen, Zusammensetzungen zum Beschichten von Papier und Anstrichen.

## Claims

1. A powdered composition which is redispersible in water, comprising:
a) 100 parts by weight of a filmogenic polymer powder which is insoluble in water and prepared from at least one ethylenically unsaturated monomer and at least one monomer selected from monomers having a carboxyl function and acrylamide or methacrylamide;
b) 2 to 40 parts by weight of at least one amino acid or one of its salts.

2. A powdered composition according to claim 2, characterized in that the ethylenically unsaturated monomer is selected from: styrene, butadiene, acrylic or methacrylic C₁-C₁₂ alkyl esters and their corresponding acids or vinyl esters.

3. A powdered composition according to claim 1 or claim 2, characterized in that the monomers having a carboxylic function are selected from ethylenically unsaturated carboxylic acids.

4. A powdered composition according to claim 3, characterized in that the monomers with a carboxylic function are selected from ethylenically unsaturated carboxylic dibasic acids such as: fumaric acid, itaconic acid, crotonic acid, maleic acid, maleic anhydride, mesaconic acid. glutaconic acid or mixtures thereof.

5. A powdered composition according to any one of the preceding claims, characterized in that the water-insoluble polymer is prepared from a mixture of monomers comprising 99.9% to 92% by weight of at least one ethylenically unsaturated monomer and 0.1% to 8% by weight of at least one monomer having a carboxylic function.

6. A powdered composition according to any one of the preceding claims, characterized in that the amino acid is selected from:
■ monocarboxylated monoamino acids;
■ dicarboxylated monoamino acids;
■ monocarboxylated diamino acids.

7. A powdered composition according to any one of the preceding claims, characterized in that the amino acid is selected from glycine, alanine, leucine, phenylalanine, aspartic acid, glutamic acid, hydroxyglutamic acid, arginine, lysine, histidine and cysteine.

8. A powdered composition according to any one of the preceding claims, characterized in that the amino acid salt is a water-soluble or hydroalkali-soluble salt.

9. A powdered composition according to any one of the preceding claims, characterized in that the composition comprises at least one water-soluble compound (c) selected from polyelectrolytes from the weak polyacid family.

10. A powdered composition according to any one of the preceding claims, characterized in that the composition comprises a powdered mineral filler (d) with a granulometry of less than 20 µm.

11. A process for preparing a redispersible powdered composition as defined in any one of the preceding claims, characterized in that:
• water is eliminated from an aqueous emulsion constituted by said insoluble filmogenic polymer prepared by emulsion polymerisation and containing suitable quantities of additives (b) and optionally (c) and (d);
• the dry residue is pulverised to a powder with the desired granulometry.

12. A process according to claim 11, characterized in that the process is a spray drying process.

13. A process according to claim 11 or claim 12, characterized in that all or part of the mineral filler (d) is added at the spraying stage.

14. A pseudo-latex obtained by redispersing a powdered composition as defined in any one of claims 1 to 10 in water.

15. Use of pseudo-latexes as defined in claim 14 and powdered compositions as defined n claims 1 to 10, as additives to binders, adhesives, paper coating compositions and paints.
